# EUROPEAN PATENT SPECIFICATION

(11) **EP 3 980 479 B1**
(45) Date of publication and mention of the grant of the patent: **17.06.2026**
(21) Application number: 20727639.5
(22) Date of filing: 25.05.2020
(51) Int. Cl.: C08G 18/18, C08G 18/32, C08G 18/48, C08G 18/50, C08G 18/66, C08G 18/76, C08G 101/00

(54) **A REACTIVE COMPOSITION FOR POLYURETHANE FOAM AND USE THEREOF IN AUTOMOBILE PARTS**
REAKTIVE ZUSAMMENSETZUNG FÜR POLYURETHANSCHAUM UND VERWENDUNG DAVON IN AUTOMOBILTEILEN
COMPOSITION RÉACTIVE POUR MOUSSE DE POLYURÉTHANE ET SON UTILISATION DANS DES PIÈCES AUTOMOBILES

(30) Priority: 05.06.2019 US 201962857307 P; 15.07.2019 EP 19186230
(43) Date of publication of application: 13.04.2022
(73) Proprietor: BASF SE, 67056 Ludwigshafen am Rhein (DE)
(72) Inventor: FAY, Jonathan D B, Wyandotte, Michigan 48192 (US); MICHALAK, Jacob Tyler, Wyandotte, Michigan 48192 (US); PEELER, Calvin T, Wyandotte, Michigan 48192 (US)
(74) Representative: BASF IP Association
(86) International application number: PCT/EP2020/064383
(87) International publication number: WO 2020/244947

(56) References cited:
- EP-A1- 1 679 327
- WO-A1-01/07521
- US-A1- 2016 090 459
- US-A1- 2019 127 542

## Description

### Field of invention

The present invention relates to a reactive composition, a semi-rigid polyurethane foam obtained therefrom, a filled cavity and use thereof in automobile parts.

### Background of the invention

Polyurethane cavity filling foams, particularly those having low densities, are suitable replacement for inserted baffles to inhibit noise transmission through automotive body structures, as they offer advantages in terms of cost and performance. There is, however, a perceived exposure concern relative to isocyanate (MDI) emissions from the foam reactions for workers in the automotive assembly area. Many of the attempts to reduce isocyanate emissions in MDI aimed to reduce the monomer content by forming a NCO-terminated prepolymer of MDI with an isocyanate reactive component.

EP 1 679 327 A1 describes flexible PU foam and a seat pad and sound absorbing material comprising the PU foam. The document measures sound absorption performance of the PU foam according to ISO 10534-2. The sound absorption values measure the ability to reduce reverberation in environments where surfaces reflect sound. In fact, the sound absorption coefficient is a dimensionless ratio of sound energy absorbed by a given surface to that incident upon that surface. The PU foam described in this document is based on toluylene diisocyanates, including its isomeric mixture of 2,4- and 2,6-isomers, with molding time as high as 6 minutes.

US 5,817,860 A describes a polyisocyanate prepolymer composition comprising the reaction product of an organic polyisocyanate, a monohydric alcohol and a polyol. The monomeric isocyanate content in the prepolymer composition was 10 wt.-%. Foam having a free rise density of 35.24 kg/m³ was obtained from the prepolymer composition at a mix ratio by volume of 24:1.

Another, US 8,455,679 B2 describes a prepolymer system having a monomeric isocyanate content of no greater than 10 wt.-% of the prepolymer system. The prepolymer system comprises a diluent component obtained as a reaction product of monohydric isocyanate reactive component and an isocyanate component; and a prepolymer component different from the diluent component. The mix ratio by volume was kept at 24:1 to obtain the foam having density of about 35.24 kg/m³.

US 2016/090459 A1, US 2019/127542 A1 and WO 01/07521 A1 are also dealing with polyurethane foams.

The existing polyurethane (PU) foams for NVH (noise vibration and harshness), also referred as NVH foams, exhibit reduced isocyanate emissions. However, these NVH foams result in increased amine emissions and are obtained at high mix ratios and processing temperatures. Moreover, the polyol component of these NVH foams has storage stability issues, which renders the resulting foam dimensionally unstable. Storage stability, in the present context, is demonstrated by chemical stability and phase stability.

B-side components comprising autocatalytic polyols such as the one described in WO 2018/136258, although provide for stability in the foam, describe high mix ratio and therefore, result in a foam with high density.

It was, therefore, an object of the presently claimed invention to provide a reactive composition comprising an isocyanate reactive component or B-side component which is stable, provides for a low density semi-rigid polyurethane foam with acceptable isocyanate and amine emission levels, is processable at a low mix ratio and a low temperature, thereby rendering it suitable for cost effective automotive applications.

### Summary of the invention

Surprisingly, it has been found that the above object is met by providing a reactive composition comprising an isocyanate component comprising of methylene diphenyl diisocyanate and/or polymeric methylene diphenyl diisocyanate, and an isocyanate reactive component which comprises a blend of autocatalytic polyol having a hydroxyl number in between 450 mg KOH/g to 600 mg KOH/g, another polyol having a hydroxyl number in between 20 mg KOH/g to 100 mg KOH/g, crosslinkers, amine catalysts, surfactants and water.

Accordingly the presently claimed invention is directed to a reactive composition for producing a semi-rigid polyurethane foam characterized by a foam density of less than 40 kg/m³, determined according to ASTM D1622, said composition comprising:
(A) an isocyanate component comprising methylene diphenyl diisocyanate and/or polymeric methylene diphenyl diisocyanate, and
(B) an isocyanate reactive component comprising:
   (a) 25 wt.-% to 75 wt.-% of at least one autocatalytic polyol having an average functionality in between 2.8 to 3.5 and a hydroxyl number in between 450 mg KOH/g to 600 mg KOH/g,
   (b) 10 wt.-% to 70 wt.-% of at least one polyol having an average functionality in between 2.2 to 5.0 and hydroxyl number in between 20 mg KOH/g to 100 mg KOH/g,
   (c) 0.1 wt.-% to 5.0 wt.-% of at least one crosslinker,
   (d) 0.01 wt.-% to 5.0 wt.-% of at least one amine catalyst,
   (e) 0.1 wt.-% to 5.0 wt.-% of at least one surfactant, and
   (f) 1.0 wt.-% to 15.0 wt.-% of water, wherein the wt.% is based on the total weight of isocyanate reactive component, wherein crosslinker (c) is selected from monoethanolamine, diethanolamine, triethanolamine, glycerine, trimethylolpropane and pentaerythritol.

In another aspect, the presently claimed invention is directed to a process for preparing a semi-rigid polyurethane foam, said process comprising the steps of:
(S1) mixing the above reactive composition, and
(S2) curing the reactive composition to obtain a polyurethane foam having a foam density of less than 40 kg/m³ determined according to ASTM D1622,
wherein the reactive composition has a tack free time of less than 15 seconds.

In yet another aspect, the presently claimed invention is directed to a semi-rigid polyurethane foam, as above.

In still another aspect, the presently claimed invention is directed to a process for filling a cavity, said process comprising the steps of:
(M1) injecting the above reactive composition in a cavity defined by at least two sides, and
(M2) curing the reactive composition so that the reactive composition expands to bridge the sides of the cavity.

In yet another aspect, the presently claimed invention is directed to a filled cavity obtained by the above process.

In another aspect, the presently claimed invention is directed to a shaped article comprising the above filled cavity.

### Detailed description of the invention

Before the present compositions and formulations of the invention are described, it is to be understood that this invention is not limited to particular compositions and formulations described, since such compositions and formulation may, of course, vary. It is also to be understood that the terminology used herein is not intended to be limiting, since the scope of the present invention will be limited only by the appended claims.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

Furthermore, the terms "first", "second", "third" or "(a)", "(b)", "(c)", "(d)" etc. and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. In case the terms "first", "second", "third" or "(A)", "(B)" and "(C)" or "(a)", "(b)", "(c)", "(d)", "i", "ii" etc. relate to steps of a method or use or assay there is no time or time interval coherence between the steps, that is, the steps may be carried out simultaneously or there may be time intervals of seconds, minutes, hours, days, weeks, months or even years between such steps, unless otherwise indicated in the application as set forth herein above or below.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the invention, and form different embodiments, as would be understood by those in the art. For example, in the appended claims, any of the claimed embodiments can be used in any combination.

Furthermore, the ranges defined throughout the specification include the end values as well, i.e. a range of 1 to 10 implies that both 1 and 10 are included in the range. For the avoidance of doubt, the applicant shall be entitled to any equivalents according to applicable law.

An aspect of the present invention is embodiment 1, directed to a reactive composition for producing a semi-rigid polyurethane foam characterized by a foam density of less than 40 kg/m , determined according to ASTM D1622, said composition comprising:
(A) an isocyanate component comprising methylene diphenyl diisocyanate and/or polymeric methylene diphenyl diisocyanate, and (B) an isocyanate reactive component comprising:
   (a) 25 wt.-% to 75 wt.-% of at least one autocatalytic polyol having an average functionality in between 2.8 to 3.5 and a hydroxyl number in between 450 mg KOH/g to 600 mg KOH/g,
   (b) 10 wt.-% to 70 wt.-% of at least one polyol having an average functionality in between 2.2 to 5.0 and hydroxyl number in between 20 mg KOH/g to 100 mg KOH/g,
   (c) 0.1 wt.-% to 5.0 wt.-% of at least one crosslinker,
   (d) 0.01 wt.-% to 5.0 wt.-% of at least one amine catalyst,
   (e) 0.1 wt.-% to 5.0 wt.-% of at least one surfactant, and
   (f) 1.0 wt.-% to 15.0 wt.-% of water, wherein the wt.% is based on the total weight of isocyanate reactive component, wherein crosslinker (c) is selected from monoethanolamine, diethanolamine, triethanolamine, glycerine, trimethylolpropane and pentaerythritol.

In one embodiment, the isocyanate reactive component (B) and the isocyanate component (A) in the embodiment 1 is present in a weight ratio, (B):(A), in between 1.0:3.0 to 3.0:1.0. In the present context, the weight ratio (B):(A) can be alternatively referred to as the mix ratio or mixing ratio. In another embodiment, the weight ratio (B):(A) in the embodiment 1 is in between 1.0:2.0 to 2.0:1.0, or 1.0:2.0 to 1.0:1.0. In yet another embodiment, the weight ratio (B):(A) in the embodiment 1 is in between 0.8:1.0 to 1.0:1.0. The weight ratio is determined as the ratio between the sum of autocatalytic polyol (a), polyol (b), crosslinker (c), amine catalyst (d) and surfactant (e) in the isocyanate reactive component (B) to isocyanate in the isocyanate component (A).

In another embodiment, the isocyanate reactive component (B) and the isocyanate component
(A) in the embodiment 1 is present in a mix ratio by volume (B):(A) in between 1.0:3.0 to 3.0:1.0. The mix ratio by volume is determined as the ratio between the isocyanate reactive component
(B) and the isocyanate component (A). In an embodiment, the mix ratio by volume is in between 1.0:2.0 to 2.0:1.0. In another embodiment, it is 1.0:1.0.

In an embodiment, the isocyanate component (A) and the isocyanate reactive component (B) in the embodiment are present at an index in between 40 to 200. In another embodiment, the index is in between 40 to 180, or 40 to 160. In yet another embodiment, the index is in between 40 to 150, or 45 to 150, or 45 to 140. In still another embodiment, the index is in between 45 to 130, or 50 to 130, or 50 to 120, or 50 to 110. The isocyanate index describes the molar ratio of NCO groups to isocyanate reactive groups. An index of 100 relates to the ratio of 1:1.

In the present context, the isocyanate component (A) can be alternately also referred to as Aside component, while the isocyanate reactive component (B) as B-side component.

### Isocyanate component (A)

In one embodiment, the isocyanate component (A) in the embodiment 1 comprises an aromatic isocyanate or an aliphatic isocyanate. It is to be understood that the isocyanate includes both monomeric and polymeric forms of the aliphatic or aromatic isocyanate. By the term "polymeric", it is referred to the polymeric grade of the aliphatic or aromatic isocyanate comprising, independently of each other, different oligomers and homologues.

In an embodiment, the aliphatic isocyanate is selected from tetramethylene 1,4-diisocyanate, pentamethylene 1,5-diisocyanate, hexamethylene 1,6-diisocyanate, decamethylene diisocyanate, 1,12-dodecane diisocyanate, 2,2,4-trimethyl-hexamethylene diisocyanate, 2,4,4-trimethyl-hexamethylene diisocyanate, 2-methyl-1,5-pentamethylene diisocyanate, cyclobutane-1,3-diisocyanate, 1,2-, 1,3- and 1,4-cyclohexane diisocyanates, 2,4- and 2,6-methylcyclohexane diisocyanate, 4,4'- and 2,4'-dicyclohexyldiisocyanates, 1,3,5-cyclohexane triisocyanates, isocyanatomethylcyclohexane isocyanates, isocyanatoethylcyclohexane isocyanates, bis(isocyanatomethyl)-cyclohexane diisocyanates, 4,4'-diisocyanatodicyclohexylmethane, pentamethylene 1,5-diisocyanate, isophorone diisocyanate and mixtures thereof.

In one embodiment, the isocyanate component (A) in the embodiment 1 comprises an aromatic isocyanate. In another embodiment, the isocyanate component (A) in the embodiment 1 consists of the aromatic isocyanate only.

Suitable aromatic isocyanate is selected from toluene diisocyanate; polymeric toluene diisocyanate, methylene diphenyl diisocyanate and/or polymeric methylene diphenyl diisocyanate; m-phenylene diisocyanate; 1,5-naphthalene diisocyanate; 4-chloro-1; 3-phenylene diisocyanate; 2,4,6-toluylene triisocyanate, 1,3-diisopropylphenylene-2,4-diisocyanate; 1-methyl-3,5-diethylphenylene-2,4-diisocyanate; 1,3,5-triethylphenylene-2,4-diisocyanate; 1,3,5-triisoproply-phenylene-2,4-diisocyanate; 3,3'-diethyl-bisphenyl-4,4'-diisocyanate; 3,5,3',5'-tetraethyl-diphenylmethane-4,4'-diisocyanate; 3,5,3',5'-tetraisopropyldiphenylmethane-4,4'-diisocyanate; 1-ethyl-4-ethoxy-phenyl-2,5-diisocyanate; 1,3,5-triethyl benzene-2,4,6-triisocyanate; 1-ethyl-3,5-diisopropyl ben-zene-2,4,6-triisocyanate, tolidine diisocyanate and 1,3,5-triisopropyl benzene-2,4,6-triisocyanate.

In another embodiment, the aromatic isocyanate is selected from toluene diisocyanate; polymeric toluene diisocyanate, methylene diphenyl diisocyanate and/or polymeric methylene diphenyl diisocyanate; m-phenylene diisocyanate; 1,5-naphthalene diisocyanate; 4-chloro-1; 3-phenylene diisocyanate; 2,4,6-toluylene triisocyanate, 1,3-diisopropylphenylene-2,4-diisocyanate; 1-methyl-3,5-diethylphenylene-2,4-diisocyanate. In yet other embodiment, the aromatic isocyanate is selected from toluene diisocyanate; polymeric toluene diisocyanate, methylene diphenyl diisocyanate and/or polymeric methylene diphenyl diisocyanate; m-phenylene diisocyanate; 1,5-naphthalene diisocyanate; 4-chloro-1; 3-phenylene diisocyanate. In still other embodiment, the aromatic isocyanate is selected from toluene diisocyanate; polymeric toluene diisocyanate, methylene diphenyl diisocyanate and/or polymeric methylene diphenyl diisocyanate; m-phenylene diisocyanate. In a further embodiment, the isocyanate comprises methylene diphenyl diisocyanate and/or polymeric methylene diphenyl diisocyanate.

Methylene diphenyl diisocyanate is available in three different isomeric forms, namely 2,2'-methylene diphenyl diisocyanate (2,2'-MDI), 2,4'-methylene diphenyl diisocyanate (2,4'-MDI) and 4,4'-methylene diphenyl diisocyanate (4,4'-MDI). Methylene diphenyl diisocyanate can be classified into monomeric methylene diphenyl diisocyanate and polymeric methylene di-phenyl diisocyanate referred to as technical methylene diphenyl diisocyanate. Polymeric methylene diphenyl diisocyanate includes oligomeric species and methylene diphenyl diisocyanate isomers. Thus, polymeric methylene diphenyl diisocyanate may contain a single methylene diphenyl diisocyanate isomer or isomer mixtures of two or three methylene diphenyl diisocyanate isomers, the balance being oligomeric species. Polymeric methylene diphenyl diisocyanate tends to have isocyanate functionalities of higher than 2.0. The isomeric ratio as well as the amount of oligomeric species can vary in wide ranges in these products. For instance, polymeric methylene diphenyl diisocyanate may typically contain 30 wt.-% to 80 wt.-% of methylene diphenyl diisocyanate isomers, the balance being said oligomeric species. The methylene diphenyl diisocyanate isomers are often a mixture of 4,4'-methylene diphenyl diisocyanate, 2,4'-methylene diphenyl diisocyanate and very low levels of 2,2'-methylene di-phenyl diisocyanate.

In one embodiment, no other isocyanate except methylene diphenyl diisocyanate and/or polymeric methylene diphenyl diisocyanate is present in the isocyanate component (A) in the embodiment 1.

In still another embodiment, the isocyanate component (A) in the embodiment 1 comprises a polymeric methylene diphenyl diisocyanate, as described hereinabove. Commercially available isocyanates available under the tradename, such as, but not limited to, Lupranat^{□} from BASF can also be used for the purpose of the present invention. Isocyanate reactive component (B)

The isocyanate reactive component (B) in the embodiment 1 comprises:
(a) 25 wt.-% to 75 wt.-% of at least one autocatalytic polyol having an average functionality in between 2.8 to 3.5 and a hydroxyl number in between 450 mg KOH/g to 600 mg KOH/g,
(b) 10 wt.-% to 70 wt.-% of at least one polyol having an average functionality in between 2.2 to 5.0 and hydroxyl number in between 20 mg KOH/g to 100 mg KOH/g,
(c) 0.1 wt.-% to 5.0 wt.-% of at least one crosslinker,
(d) 0.01 wt.-% to 5.0 wt.-% of at least one amine catalyst,
(e) 0.1 wt.-% to 5.0 wt.-% of at least one surfactant, and
(f) 1.0 wt.-% to 15.0 wt.-% of water
wherein the wt.% is based on the total weight of isocyanate reactive component, wherein crosslinker (c) is selected from monoethanolamine, diethanolamine, triethanolamine, glycerine, trimethylolpropane and pentaerythritol.

### Autocatalytic polyol (a)

Autocatalytic polyols, in the present context, are polyols with self-catalytic activity. These polyols, with an intrinsic catalytic activity, are chemically incorporated in the polyurethane (PU) structure. As an immediate consequence, the quantity of amines needed as the catalyst is reduced considerably and, of course, the amine emissions are also considerably diminished. The autocatalytic polyols provide for a fast gel time.

In one embodiment, the autocatalytic polyol (a) in the embodiment 1 is a polyether polyol that is obtained by reacting an amine-containing starter molecule and an alkylene oxide. Suitable amine-containing starter molecule is selected from 3,3'-diamino-N-methyldipropylamine, 2,2'-diamino-N-methyldiethylamine, 2,3-diamino-N-methyl-ethylpropylamine, 1,2-phenylenediamine, 1,3-phenylenediamine, 1,4-phenylenediamine, 2,3-toluene diamine, 2,4-toluene diamine, 3,4-toluene diamine, 2,6-toluene diamine, 4,4'-diaminodiphenylmethane, 2,4'-diaminodiphenylmethane, 2,2'-diaminodiphenylmethane, ethanolamine, N-methylethanolamine, N-ethylethanolamine, diethanolamine, N-methyldiethanolamine, N-ethyldiethanolamine and triethanolamine.

In another embodiment, the amine-containing starter molecule is selected from 1,3-phenylenediamine, 1,4-phenylenediamine, 2,3-toluene diamine, 2,4-toluene diamine, 3,4-toluene diamine, 2,6-toluene diamine, 4,4'-diaminodiphenylmethane, 2,4'-diaminodiphenylmethane, 2,2'-diaminodiphenylmethane, ethanolamine, N-methylethanolamine, N-ethylethanolamine, diethanolamine, N-methyldiethanolamine, N-ethyldiethanolamine and triethanolamine. In yet another embodiment, it is selected from 2,4-toluene diamine, 3,4-toluene diamine, 2,6-toluene diamine, 4,4'-diaminodiphenylmethane, 2,4'-diaminodiphenylmethane, 2,2'-diaminodiphenylmethane, ethanolamine, N-methylethanolamine, N-ethylethanolamine, diethanolamine, N-methyldiethanolamine, N-ethyldiethanolamine and triethanolamine. In still another embodiment, it is selected from 2,6-toluene diamine, 4,4'-diaminodiphenylmethane, 2,4'-diaminodiphenylmethane, 2,2'-diaminodiphenylmethane, ethanolamine, N-methylethanolamine, N-ethylethanolamine, diethanolamine, N-methyldiethanolamine, N-ethyldiethanolamine and triethanolamine. In a further embodiment, the amine-containing starter molecule comprises ethanolamine.

In one embodiment, the alkylene oxide is selected from ethylene oxide, propylene oxide, butylene oxide, styrene oxide, isomers and mixtures thereof. In another embodiment, it is selected from ethylene oxide and propylene oxide.

The amount of the autocatalytic polyol (a) is dependent on the desired reactivity profile that is needed. The autocatalytic polyol (a) is present in an amount in between 25 wt.-% to 75 wt.-% based on the total weight of the isocyanate reactive component (B). In another embodiment, it is present in between 25 wt.-% to 70 wt.-%, or 30 wt.-% to 70 wt.-%, or 30 wt.-% to 65 wt.-%. In yet another embodiment, it is present in between 32 wt.-% to 65 wt.-%, or 32 wt.-% to 60 wt.-%, or 35 wt.-% to 60 wt.-%, or 35 wt.-% to 55 wt.-%, or 38 wt.-% to 55 wt.-%. In a further embodiment, it is present in between 38 wt.-% to 50 wt.-%, or 40 wt.-% to 50 wt.-%.

### Polyol (b)

The isocyanate reactive component (B) also comprises the polyol (b), which is different from the autocatalytic polyol (a). The average functionality is in between 2.2 to 5.0 and hydroxyl number is in between 20 mg KOH/g to 100 mg KOH/g. In another embodiment, the average functionality is in between 2.4 to 3.2 and hydroxyl number is in between 25 mg KOH/g to 50 mg KOH/g.

The presence of polyol (b) along with the autocatalytic polyol (a) in the reactive composition provides for fast gel time along with softness and flexibility in the PU foam.

In one embodiment, the polyol (b) in the embodiment 1 is selected from polyester polyol, polyether polyol and polyether-ester polyol. Said otherwise, the polyol (b) in the embodiment 1 consists of at least one selected from polyester polyol, polyether polyol and polyether-ester polyol.

In another embodiment, no other polyol except the ones selected from polyester polyol, polyether polyol and polyether-ester polyol are present as polyol (b) in the embodiment 1.

Suitable polyether polyols are obtainable by known methods, for example by anionic polymerization with alkali metal hydroxides, e.g., sodium hydroxide or potassium hydroxide, or alkali metal alkoxides, e.g., sodium methoxide, sodium ethoxide, potassium ethoxide or potassium isopropoxide, as catalysts and by adding at least one amine-containing starter molecule, or by cationic polymerization with Lewis acids, such as antimony pentachloride, boron fluoride etherate and so on, or fuller's earth, as catalysts from one or more alkylene oxides having 2 to 4 carbon atoms in the alkylene moiety.

Starter molecules for polyether polyols include amine containing and hydroxyl-containing starter molecules. Suitable amine containing starter molecules include, for example, aliphatic and aromatic diamines such as ethylenediamine, propylenediamine, butylenediamine, hexamethylenediamine, phenylenediamines, toluenediamine, diaminodiphenylmethane and isomers thereof.

Other suitable starter molecules further include alkanolamines, e.g. ethanolamine, N-methylethanolamine and N-ethylethanolamine, dialkanolamines, e.g., diethanolamine, N-methyldiethanolamine and N-ethyldiethanolamine, and trialkanolamines, e.g., triethanolamine, and ammonia.

In one embodiment, amine containing starter molecules are selected from ethylenediamine, phenylenediamines, toluenediamine and isomers thereof. In other embodiment, the amine containing starter molecules comprise ethylenediamine.

Hydroxyl-containing starter molecules are selected from sugars, sugar alcohols, for e.g. glucose, mannitol, sucrose, pentaerythritol, sorbitol; polyhydric phenols, resols, e.g., oligomeric condensation products formed from phenol and formaldehyde, trimethylolpropane, glycerol, glycols such as ethylene glycol, propylene glycol and their condensation products such as polyethylene glycols and polypropylene glycols, e.g., diethylene glycol, triethylene glycol, dipropylene glycol, and water or a combination thereof.

In one embodiment, the hydroxyl-containing starter molecule is selected from sugar and sugar alcohols such as sucrose, sorbitol, glycerol, pentaerythritol, trimethylolpropane and mixtures thereof. In another embodiment, the hydroxyl-containing starter molecule is selected from sucrose, glycerol, pentaerythritol and trimethylolpropane. In yet another embodiment, the hydroxyl-containing starter molecule comprises glycerol.

Suitable alkylene oxides having 2 to 4 carbon atoms are, for example, ethylene oxide, propylene oxide, tetrahydrofuran, 1,2-butylene oxide, 2,3-butylene oxide and styrene oxide. Alkylene oxides can be used singly, alternatingly in succession or as mixtures. In one embodiment, the alkylene oxides are propylene oxide and/or ethylene oxide. In other embodiment, the alkylene oxides are mixtures of ethylene oxide and propylene oxide that comprise more than 50 wt.-% of propylene oxide.

In one embodiment, the polyol (b) in the embodiment 1 comprises glycerol and propylene oxide-based polyether polyol with end capping of ethylene oxide and has an average functionality of 3.0 and hydroxyl number of 27 mg KOH/g.

Polyester polyols, according to the present invention, are based on the reaction product of carboxylic acids or anhydrides with hydroxyl group containing compounds. Suitable carboxylic acids or anhydrides have from 2 to 20 carbon atoms, or from 4 to 18 carbon atoms, for example succinic acid, glutaric acid, adipic acid, suberic acid, azelaic acid, sebacic acid, decanedicarboxylic acid, maleic acid, fumaric acid, phthalic acid, isophthalic acid, terephthalic acid, oleic acid, phthalic anhydride. Particularly comprising phthalic acid, isophthalic acid, terephthalic acid, oleic acid and phthalic anhydride or a combination thereof.

Suitable hydroxyl containing compounds are selected from ethanol, ethylene glycol, propylene-1,2-glycol, propylene-1,3-glycol, butyl-ene-1,4-glycol, butylene-2,3-glycol, hexane-1,6-diol, octane-1,8-diol, neopentyl glycol, cyclohexane dimethanol (1,4-bis-hydroxy-methylcyclohexane), 2-methyl-propane-1,3-diol, glycerol, trimethylolpropane, hex-ane-1,2,6-triol, butane -1,2,4-triol, trimethylolethane, pentaerythritol, quinitol, mannitol, sorbitol, methyl glycoside, diethylene glycol, triethylene glycol, tetraethylene glycol, polyethylene glycol, dipropylene glycol, polypropylene glycol, polyethylene-propylene glycol, dibutylene glycol and polybutylene glycol.

Suitable polyether-ester polyols are obtainable as a reaction product of i) at least one hydroxyl-containing starter molecule; ii) of one or more fatty acids, fatty acid monoesters or mixtures thereof; iii) of one or more alkylene oxides having 2 to 4 carbon atoms.

The starter molecules of component i) are generally selected such that the average functionality of component i) is in between 2.2 to 5.0. Optionally, a mixture of suitable starter molecules can be used.

In one embodiment, the hydroxyl-containing starter molecules of component i) are selected from sugars, sugar alcohols (glucose, mannitol, sucrose, pentaerythritol, sorbitol), polyhydric phenols, resols, e.g., oligomeric condensation products formed from phenol and formaldehyde, trimethylolpropane, glycerol, glycols such as ethylene glycol, propylene glycol and their condensation products such as polyethylene glycols and polypropylene glycols, e.g., diethylene glycol, triethylene glycol, dipropylene glycol, water and a mixture thereof.

In other embodiment, the hydroxyl-containing starter molecules of component i) are selected from sugars and sugar alcohols such as sucrose and sorbitol, glycerol, and mixtures of said sugars and/or sugar alcohols with glycerol, water and/or glycols such as, for example, diethylene glycol and/or dipropylene glycol.

Said fatty acid or fatty acid monoester ii) is selected from polyhydroxy fatty acids, ricinoleic acid, hydroxyl-modified oils, hydroxyl-modified fatty acids and fatty acid esters based in myristoleic acid, palmitoleic acid, oleic acid, stearic acid, palmitic acid, vaccenic acid, petroselic acid, gadoleic acid, erucic acid, nervonic acid, linoleic acid, a- and g-linolenic acid, stearidonic acid, arachidonic acid, timnodonic acid, clupanodonic acid, cervonic acid and a mixture thereof. Fatty acids can be used as purely fatty acids. In this regard, preference is given to using fatty acid methyl esters such as, for example, biodiesel or methyl oleate.

Biodiesel is to be understood as meaning fatty acid methyl esters within the meaning of the EN 14214 standard from 2010. Principal constituents of biodiesel, which is generally produced from rapeseed oil, soybean oil or palm oil, are methyl esters of saturated C₁₆ to C₁₈ fatty acids and methyl esters of mono- or polyunsaturated C₁₈ fatty acids such as oleic acid, linoleic acid and linolenic acid.

Suitable alkylene oxides iii) having 2 to 4 carbon atoms are, for example, ethylene oxide, propylene oxide, tetrahydrofuran, 1,2-butylene oxide, 2,3-butylene oxide and/or styrene oxide. Alkylene oxides can be used singly, alternatingly in succession or as mixtures.

The polyol (b) in the embodiment 1 is present in an amount in between 10 wt.-% to 70 wt.-%, based on the total weight of the isocyanate reactive component (B). In another embodiment, it is present in between 25 wt.-% to 70 wt.-%, or 30 wt.-% to 70 wt.-%, or 30 wt.-% to 65 wt.-%. In yet another embodiment, it is present in between 32 wt.-% to 65 wt.-%, or 32 wt.-% to 60 wt.-%, or 35 wt.-% to 60 wt.-%, or 35 wt.-% to 55 wt.-%, or 38 wt.-% to 55 wt.-%. In a further embodiment, it is present in between 38 wt.-% to 50 wt.-%, or 40 wt.-% to 50 wt.-%.

### Crosslinker (c)

In one embodiment, the crosslinker (c) in the embodiment 1 comprises a compound containing at least two isocyanate reactive groups and having a molecular weight in between 30 g/mol to 150 g/mol. In another embodiment, the crosslinker has a molecular weight in between 30 g/mol to 125 g/mol, or 30 g/mol to 75 g/mol and is selected from monoethanolamine, diethanolamine, triethanolamine, glycerine, trimethylolpropane and pentaerythritol. In yet another embodiment, the crosslinker (c) in the embodiment 1 comprises diethanolamine.

The crosslinker (c) in the embodiment 1 is present in an amount in between 0.1 wt.-% to 5.0 wt.-%, based on the total weight of the isocyanate reactive component (B). In another embodiment, it is present in between 0.2 wt.-% to 5.0 wt.-%, or 0.2 wt.-% to 4.5 wt.-%, or 0.2 wt.-% to 4.0 wt.-%. In yet another embodiment, it is present in between 0.3 wt.-% to 4.0 wt.-%, or 0.3 wt.-% to 3.5 wt.-%, or 0.4 wt.-% to 3.5 wt.-%. In still another embodiment, it is present in between 0.4 wt.-% to 3.0 wt.-%, 0.4 wt.-% to 2.5 wt.-%, or 0.5 wt.-% to 2.5 wt.-%.

### Amine catalyst (d)

In one embodiment, the amine catalyst (d) in the embodiment 1 is a tertiary amine. The presence of tertiary amine catalyst, in addition to the autocatalytic polyol (a), results in an overall increase in the foam forming reaction. Thus, the reactive composition of the embodiment 1 provide for an increased rate of PU foam formation, which is dimensionally stable as well. By the term "dimensionally stable", it is referred to the physical stability of the PU foam. Said otherwise, the PU foam shows very minute changes (of less than 1.5% volumetric change) or no change at all when subjected to test conditions.

In another embodiment, the amine catalyst (d) in the embodiment 1 is selected from trimethylamine, triethylamine, dimethylethanolamine, N-methylmorpholine, N,N-dimethylbenzylamine, N,N-dimethylethanolamine, N,N,N',N'-tetramethyle-1,4-butanediamine, N,N-dimethylpiperazine, bis(dimethylaminoethyl)ether, bis(2-dimethylaminoethyl) ether, morpholine,4,4'-(oxydi-2,1-ethanediyl)bis, triethylenediamine, pentamethyl diethylene triamine, dimethyl cyclohexyl amine, N-acetyl N,N-dimethyl amine, N-coco-morpholine, N,N-dimethyl aminomethyl N-methyl ethanol amine, N, N, N'-trimethyl-N'-hydroxyethyl bis(aminoethyl) ether, N,N-bis(3-dimethyl-aminopropyl)N-isopropanolamine, (N,N-dimethyl) amino-ethoxy ethanol, N, N, N', N'-tetramethyl hexane diamine, 1,8-diazabicyclo-5,4,0-undecene-7, N,N-dimorpholinodiethyl ether, N-methyl imidazole, dimethyl aminopropyl dipropanolamine, bis(dimethylaminopropyl)amino-2-propanol, tetramethylamino bis (propylamine), (dimethyl(aminoethoxyethyl))((dimethyl amine)ethyl)ether, tris(dimethylamino propyl) amine, dicyclohexyl methyl amine, bis(N,N-dimethyl-3 -aminopropyl) amine, and 1,2-ethylene piperidine and methyl -hydroxyethyl piperazine, 1,4-diazabicyclo[2.2.2]octane-2-methanol and N-(3-dimethylaminopropyl)-N,N-diisopropanolamine.

In another embodiment, the amine catalyst (d) in the embodiment 1 is selected from N, N, N'-trimethyl-N'-hydroxyethyl bis(aminoethyl) ether, N,N-bis(3-dimethyl-aminopropyl)N-isopropanolamine, (N,N-dimethyl) amino-ethoxy ethanol, N, N, N', N'-tetramethyl hexane diamine, I,8-diazabicyclo-5,4,0-undecene-7, N,N-dimorpholinodiethyl ether, N-methyl imidazole, dimethyl aminopropyl dipropanolamine, bis(dimethylaminopropyl)amino-2-propanol, tetramethylamino bis (propylamine), (dimethyl(aminoethoxyethyl))((dimethyl amine)ethyl)ether, tris(dimethylamino propyl) amine, dicyclohexyl methyl amine, bis(N,N-dimethyl-3 -aminopropyl) amine, and 1,2-ethylene piperidine and methyl -hydroxyethyl piperazine, 1,4-diazabicyclo[2.2.2]octane-2-methanol and N-(3-dimethylaminopropyl)-N,N-diisopropanolamine.

In yet another embodiment, the amine catalyst (d) in the embodiment 1 is selected from N, N, N'-trimethyl-N'-hydroxyethyl bis(aminoethyl) ether, N,N-bis(3-dimethyl-aminopropyl)N-isopropanolamine, 1,4-diazabicyclo[2.2.2]octane-2-methanol and N-(3-dimethylaminopropyl)-N,N-diisopropanolamine. In another embodiment, a mixture of these amine catalysts (d) can also be used.

The amine catalyst (d) in the embodiment 1 is present in an amount in between 0.01 wt.-% to 5.0 wt.-%, based on the total weight of the isocyanate reactive component (B). In case of a mixture, each of the amine catalyst, as described herein, is present in an amount in between 0.01 wt.-% to 5.0 wt.-%, based on the total weight of the isocyanate reactive component (B).

### Surfactant (e)

In the present context, the surfactant (e) does not contain any reactive functional group towards NCO. Said otherwise, the surfactant (e) does not contain any free hydroxyl groups.

In one embodiment, the surfactant (e) in the embodiment 1 is a non-ionic surfactant. In another embodiment, the non-ionic surfactant comprises a polyether polysiloxane and/or a polyether siloxane

In another embodiment, the polyether polysiloxane is a polyether polysiloxane of general formula (I), 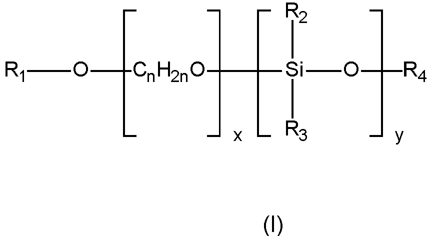 **wherein,**
R₁, R₂, R₃ and R₄ is, independent of each other, selected from alkyl, alkenyl, cycloalkyl, aryl, heteroaryl, alkylalkoxy, R₉-C(=O)-, R₁₀-NH-C(=O)-, R₁₁Si(R₁₂)(R₁₃)-, R₁₄-O-(-R₁₅-O-)ⱼ-(CₙH₂ₙ-)ₖ-;
R₉, R₁₀, R₁₁, R₁₂, and R₁₃ is, independent of each other, selected from alkyl, alkenyl, cycloalkyl, aryl, heteroaryl, alkylalkoxy;
R₁₄ and R₁₅ is, independent of each other, selected from bivalent alkylene, cycloalkylene, alkenyl, aryl;
n is an integer in between 1 to 10;
j and k is, independent of each other, an integer in between 0 to 10; and
x and y is, independent of each other, an integer in between 1 to 10000.

The term "alkyl" herein refers to an acyclic saturated aliphatic group including linear or branched alkyl saturated hydrocarbon radical denoted by a general formula CₚH₂ₚ₊₁ and wherein p denotes the number of carbon atoms such as 1, 2, 3, 4 etc.

In one embodiment, alkyl refers to an unsubstituted, linear or branched, C₁-C₃₀ alkyl group. The unsubstituted linear C₁-C₃₀ alkyl is selected from methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, henicosyl, docosyl, tricosyl, tetracosyl, pentacosyl, hexacosyl, heptacosyl, octacosyl, noncosyl and triacontyl. In another embodiment, it is selected from methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl and eicosyl.

The term "alkenyl" refers to an unsubstituted, linear acyclic unsaturated aliphatic group including a linear alkenyl unsaturated hydrocarbon radical denoted by a general formula CₚH₂ₚ₋₁ and wherein p denotes the number of carbon atoms such as 1, 2, 3, 4 etc.

In one embodiment, alkenyl refers to an unsubstituted linear C₂-C₃₀ alkenyl selected from 1-propenyl, 1-butenyl, 1-pentenyl, 1-hexenyl, 2-hexenyl, 1-heptenyl, 2-heptenyl, 1-octenyl, 2-octenyl, 1-nonenyl, 2-nonenyl, 1-decenyl, 2-decenyl, 1-undecenyl, 2-undecenyl, 1-dodecenyl, 2-dodecenyl, 1-tridecenyl, 2-tridecenyl, 1-tetradecenyl, 2-tetradecenyl, 1-pentadecenyl, 2-pentadecenyl, 1-hexadecenyl, 2-hexadecenyl, 1-heptadecenyl, 2-heptadecenyl, 1-octadecenyl, 2-octadecenyl, 1-nonadecenyl, 2-nonadecenyl, 1-eicosenyl, 2-eicosenyl, 2-henicosenyl, 2-docosenyl, 2-tricosenyl, 2-tetracosenyl, 2-pentacosenyl, 2-hexacosenyl, 2-octacoenyl, 2-nonacosenyl and 2-triacontenyl. In another embodiment, it is selected from 1-propenyl, 1-butenyl, 1-pentenyl, 1-hexenyl, 2-hexenyl, 1-heptenyl, 2-heptenyl, 1-octenyl, 2-octenyl, 1-nonenyl, 2-nonenyl, 1-decenyl, 2-decenyl, 1-undecenyl, 2-undecenyl, 1-dodecenyl, 2-dodecenyl, 1-tridecenyl, 2-tridecenyl, 1-tetradecenyl, 2-tetradecenyl, 1-pentadecenyl, 2-pentadecenyl, 1-hexadecenyl, 2-hexadecenyl, 1-heptadecenyl, 2-heptadecenyl and 1-octadecenyl. In another embodiment, unsubstituted linear C₂-C₃₀ alkenyl selected from 1-propenyl, 1-butenyl, 1-pentenyl, 1-hexenyl, 2-hexenyl, 1-heptenyl, 2-heptenyl, 1-octenyl, 2-octenyl, 1-nonenyl, 2-nonenyl, 1-decenyl, 2-decenyl, 1-undecenyl, 2-undecenyl, 1-dodecenyl, 2-dodecenyl, 1-tridecenyl, 2-tridecenyl, 1-tetradecenyl, 2-tetradecenyl, 1-pentadecenyl and 2-pentadecenyl. In yet another embodiment, unsubstituted linear C₂-C₃₀ alkenyl selected from 1-propenyl, 1-butenyl, 1-pentenyl, 1-hexenyl, 2-hexenyl, 1-heptenyl and 2-heptenyl.

The term "cycloalkyl" refers to an unsubstituted or branched C₃-C₁₀ cycloalkyl having a monocyclic or bicyclic 3 to 10 membered saturated cycloaliphatic radical. The unsubstituted or branched C₃-C₁₀ cycloalkyl is a monocyclic or bicyclic C₃-C₁₀ compound. The representative examples of unsubstituted or branched C₃-C₁₀ monocyclic and bicyclic cycloalkyl is selected from cyclopropyl, cyclobutyl, cyclopentyl, cyclohexyl, cycloheptyl, bicyclo[2.2.1]heptyl and bicyclo[3.1.1]heptyl. The C₃-C₁₀ monocyclic and bicyclic cycloalkyl can be further branched with one or more equal or different alkyl groups, as described hereinabove. The representative examples of branched C₃-C₁₀ monocyclic and bicyclic cycloalkyl include, but are not limited to, methyl cyclohexyl, dimethyl cyclohexyl, etc.

The term "aryl" refers to a monocyclic, bicyclic or tricyclic hydrocarbon ring system having preferably 6 to 14 carbon atoms, wherein at least one carbocyclic ring is having a 4p+2π-electron system, wherein 'p' is the number of aromatic rings. An aryl moiety may be unsubstituted, monosubstituted or identically or differently polysubstituted. Examples of aryl moieties include, but are not limited to, phenyl, 1-naphthyl, 2-naphthyl or anthracenyl.

The term "heteroaryl" refers to an aromatic monocyclic, bicyclic or a tricyclic hydrocarbon having 5, 6, 7, 8, 9, 10, 11, 12, 13 or 14 carbon atoms, or even 5, 6, 9 or 10 atoms, in which one to four carbon atoms are replaced by identical or different heteroatoms including oxygen, sulfur and nitrogen. Heteroaryl moieties may comprise 1, 2, 3, 4 or 5, or 1, 2, or 3, heteroatoms independently selected from oxygen, sulfur and nitrogen. A heteroaryl moiety may be unsubstituted or monosubstituted or identically or differently polysubstituted. Representative examples of suitable heteroaryl moieties are selected from furyl, pyridyl, oxazolyl, thiazolyl, pyrazolyl, pyrimidinyl, pyrrolyl, isooxazolyl, triazolyl, tetrazolyl, pyridazinyl, isothiazolyl, benzothiazolyl, benzooxazolyl, benzimidazolyl, quinolinyl and isoquinolinyl.

The term "alkylene" refers to acyclic saturated hydrocarbon chains, which combine different moieties. Representative examples of the alkylene groups are selected from -CH₂-CH₂-, -CH₂-CH(CH₃)-, -CH₂-CH(CH₂CH₃)-, -CH₂-CH(n-C₃H₇)-, -CH₂-CH(n-C₄H₉)-, -CH₂-CH(n-C₅H₁₁)-, -CH₂-CH(n-C₆H₁₃)-, -CH₂-CH(n-C₇H₁₅)-, -CH₂-CH(n-C₈H₁₇)-, -CH(CH₃)-CH(CH₃)-, -(CH₂)₃-, -(CH₂)₄-, - (CH₂)₅-, -(CH₂)₆-, -(CH₂)₈-, -(CH₂)₁₀-, -C(CH₃)₂-, -CH₂-C(CH₃)₂-CH₂-, and -CH₂-[C(CH₃)₂]₂-CH₂-. In one embodiment, C₂-C₁₀ alkylene is selected from one or more of -CH₂-CH₂-, CH₂-CH(CH₃)-, -CH₂-CH(CH₂CH₃)-, -CH₂-CH(n-C₃H₇)-, -CH₂-CH(n-C₄H₉)-, -CH₂-CH(n-C₆H₁₃)-, and -(CH₂)₄-.

In one embodiment, the polyether polysiloxane of general formula (I) is a polyether polysiloxane of general formula (I)(a), 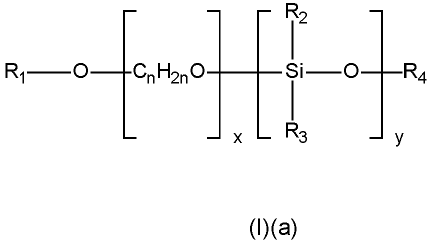 wherein,
R₁, R₂, R₃ and R₄ is, independent of each other, selected from alkyl, alkenyl, R₁₄-O-(-R₁₅-O-)ⱼ-(CₙH₂ₙ-)ₖ-;
R₁₄ and R₁₅ is, independent of each other, selected from bivalent alkylene, cycloalkylene, alkenyl, aryl;
n is an integer in between 1 to 10;
j and k is, independent of each other, an integer in between 0 to 10; and
z is an integer in between 1 to 10000.

In one embodiment, R₂ and R₃ is, independent of each other, an alkyl selected from methyl, ethyl, propyl, butyl, pentyl, hexyl, heptyl, octyl, nonyl and decyl. In another embodiment, it is selected from methyl, ethyl, propyl, butyl, pentyl and hexyl. In still another embodiment, R₂ and R₃ are identical and are selected from methyl, ethyl, propyl, butyl, pentyl and hexyl. In yet another embodiment, R₂ and R₃ comprise of methyl.

In another embodiment, n is an integer between 1 to 8, or in between 1 to 6, or even in between 1 to 4 in the general formula (I)(a).

In another embodiment, x and y are, independent of each other, an integer in between 1 to 10000, or in between 1 to 5000, or in between 1 to 1000, or in between 1 to 500, or in between 10 to 500, or even in between 10 to 250, or even still in between 10 to 100 in the general formula (I)(a).

In the present context, the concatenations denoted by x and y are distributed to form a block polymeric structure or a random polymeric structure, as is understood by the person skilled in the art.

In another embodiment, the non-ionic surfactant comprises a polyether siloxane represented by the general formula (II) 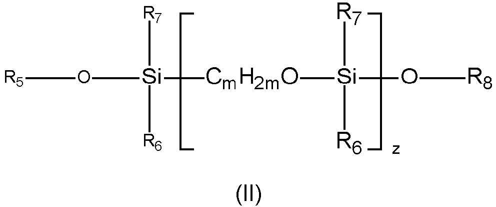 wherein,
R₅, R₆, R₇ and R₈ is, independent of each other, selected from alkyl, alkenyl, cycloalkyl, aryl, heteroaryl, alkylalkoxy, R₉-C(=O)-, R₁₀-NH-C(=O)-, R₁₁Si(R₁₂)(R₁₃)-, R₁₄-O-(-R₁₅-O-)ⱼ-(CₙH₂ₙ-)ₖ-;
R₉, R₁₀, R₁₁, R₁₂, and R₁₃ is, independent of each other, selected from alkyl, alkenyl, cycloalkyl, aryl, heteroaryl, alkylalkoxy;
R₁₄ and R₁₅ is, independent of each other, selected from bivalent alkylene, cycloalkylene, alkenyl, aryl;
m is an integer in between 1 to 10;
j and k is, independent of each other, an integer in between 0 to 10; and
z is an integer in between 1 to 10000.

In one embodiment, the polyether siloxane is represented by the general formula (II)(a), 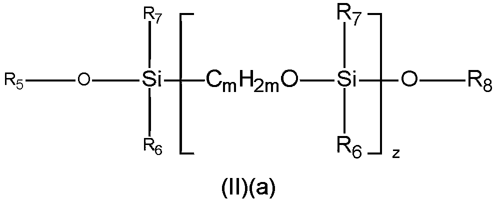 wherein,
R₅, R₆, R₇ and R₈ is, independent of each other, selected from alkyl, alkenyl, R₁₄-O-(-R₁₅-O-)ⱼ-(CₙH₂ₙ-)ₖ-;
R₁₄ and R₁₅ is, independent of each other, selected from bivalent alkylene, cycloalkylene, alkenyl, aryl;
m is an integer in between 1 to 10;
j and k is, independent of each other, an integer in between 0 to 10; and
z is an integer in between 1 to 10000.

The surfactant (e) in the embodiment 1 is present in an amount in between 0.1 wt.-% to 5.0 wt.-%, based on the total weight of the isocyanate reactive component (B). In another embodiment, it is present in between 0.1 wt.-% to 4.5 wt.-%, or 0.1 wt.-% to 4.0 wt.-%, or 0.1 wt.-% to 3.5 wt.-%. In yet another embodiment, it is present in between 0.1 wt.-% to 3.0 wt.-%, or 0.2 wt.-% to 3.0 wt.-%, or 0.2 wt.-% to 2.5 wt.-%. In still another embodiment, it is present in between 0.2 wt.-% to 2.0 wt.-%, or 0.2 wt.-% to 1.5 wt.-%, or 0.2 wt.-% to 1.0 wt.-%. In a further embodiment, it is present in between 0.2 wt.-% to 0.5 wt.-%.

### Water (f)

The isocyanate reactive component (B) also comprises water (f), which performs the function of a blowing agent. The water (f) in the embodiment 1 is present in an amount in between 1.0 wt.-% to 15.0 wt.-%, based on the total weight of the isocyanate reactive component (B). In another embodiment, it is present in between 2.0 wt.-% to 15.0 wt.-%, or 2.0 wt.-% to 13.0 wt.-%, or 3.0 wt.-% to 13.0 wt.-%. In yet another embodiment, it is present in between 3.0 wt.-% to 11.0 wt.-%, or 4.0 wt.-% to 11.0 wt.-%, or 5.0 wt.-% to 11.0 wt.-%. In still another embodiment, it is present in between 6.0 wt.-% to 11.0 wt.-%, or 7.0 wt.-% to 11.0 wt.-%.

### Additives (g)

The reactive composition of the embodiment 1 further comprises additives (g) selected from cell openers, flame retardants, dyes, pigments, IR absorbing materials, stabilizers, plasticizers, antistats, fungistats, bacteriostats, hydrolysis controlling agents, curing agents, antioxidants, alkylene carbonates, carbonamides and pyrrolidones. The additives (g) can be present in an amount in between 0.1 wt.-% to 5.0 wt.-%, based on the total weight of the isocyanate reactive component (B). Further details regarding additives can be found, for example, in the Szycher's Handbook of Polyurethanes, 2^{nd} edition, 2013.

In one embodiment, the isocyanate reactive component (B) in the embodiment 1 further comprises the additives (g), as described herein. In another embodiment, the isocyanate reactive component (B) in the embodiment 1 comprises cell openers in an amount in between 0.1 wt.-% to 5.0 wt.-%, based on the total weight of the isocyanate reactive component (B).

In another embodiment, the isocyanate component (A) and the isocyanate reactive component (B) in the embodiment 1 are storage stable for several weeks and even months.

In one embodiment, the reactive composition of the embodiment 1 can be employed for pour-in-place applications as well as spray applications. In one embodiment, the reactive composition, as described herein, is useful for pour-in-place applications, in which the reactive composition is dispensed into a cavity and foams within the cavity to fill it and provide structural and/or thermal insulative attributes to an assembly. The term "pour-in-place" refers to the fact that the foam is created at the location, where it is needed, rather than being created in one step and later assembled into place in a separate manufacturing step. Further, the term "cavity" refers to an empty or hollow space of any geometry defined by at least two sides into which the reactive composition can be dispensed at conditions such that expansion and curing of the composition occurs to form the PU foam. Suitable examples of cavities are, such as but not limited to, empty or hollow spaces in automotives.

### Process for preparing semi-rigid PU foam

Another aspect of the present invention is embodiment 2, directed to a process for preparing the semi-rigid PU foam, said process comprising the steps of:
(S1) mixing the reactive composition of the embodiment 1, and
(S2) curing the reactive composition to obtain the PU foam having a foam density of less than 40 kg/m³ determined according to ASTM D1622,
wherein the reactive composition has a tack free time of less than 15 seconds.

In an embodiment, the isocyanate reactive component (B) and the isocyanate component (A) in the reactive composition of the embodiment 2, is present in a weight ratio, (B):(A), in between 1.0:3.0 to 3.0:1.0, as described in the embodiment 1.

In one embodiment, the isocyanate component (A) and the isocyanate reactive component (B) forming the reactive composition in the embodiment 1, are stored in different vessels. Suitable storage vessels include pressurized vessels, wherein the pressure conditions suitable to handle the isocyanate component (A) and the isocyanate reactive component (B) prevail. This can be, for instance, a pressure of at least 0.01 MPa, or in between 0.01 MPa to 7 MPa, or in between 3 MPa to 6 MPa at room temperature. By the term "room temperature", it is referred to a temperature of 25 ± 3°C

In another embodiment, in the step (S1) of the embodiment 2, the reactive composition is mixed by feeding each of the isocyanate component (A) and the isocyanate reactive component (B) as two separate streams stored in different vessels. For this purpose, mixing devices can be employed. Suitable mixing devices for the purpose of the present invention are known to the person skilled in the art, for example, a mixing head. While it is preferred that each stream enters separately in the mixing device, it is possible that the isocyanate component (A) and the isocyanate reactive component (B) are well mixed by suitable mixing means, for example, a static mixer. Moreover, the mixing can be continuous or discontinuous. The isocyanate component (A) and the isocyanate reactive component (B) are mixed at the isocyanate index in between 40 to 200, as described herein.

In another embodiment, the mixing in step (S1) of the embodiment 2 can be controlled by suitable means known to the person skilled in the art, for instance by simply switching on and off or even by a process control software equipped with flow meters, so that parameters, such as mixing ratio, temperature and pressure can be controlled.

In another embodiment, the mixing in step (S1) of the embodiment 2 comprises the following sub-steps:
(S11) feeding a first stream comprising the isocyanate component (A),
(S12) feeding a second stream comprising the isocyanate reactive component (B), and
(S13) mixing the first stream and the second stream in a mixing chamber of the mixing device, thereby obtaining the reactive composition.

In one embodiment, the mixing chamber is equipped with several inlets and outlets. The first stream and the second stream are fed separately into the mixing chamber through nozzles. Suitable nozzles for feeding the streams in the mixing chamber are well known to the person skilled in the art. In one embodiment, the nozzles for each of the first stream and the second stream have a diameter ranging between 0.02 inches to 0.06 inches. In another embodiment, the mixing device is operated at a temperature of less than 80°C. In yet another embodiment, the temperature is in between 30°C to 80°C.

In another embodiment, more than two streams, for example three, four, five or six, separate streams can also be used. Each of these streams are different and may comprise of one or more of ingredients such as the isocyanates, autocatalytic polyols (a), polyols (b), crosslinkers (c), amine catalysts (d), surfactants (e), water (f) and additives (g), as described herein. Such a process is known as a multicomponent process.

In another embodiment, optionally the mixing device can further comprise at least one measurement and control unit for establishing the pressure of each stream in the mixing chamber.

In another embodiment, the curing of the reactive composition takes place in step (S2) of the embodiment 2. For this, the reactive composition of step (S1) can be, for instance, injected into the cavity, wherein foaming of the reactive composition occurs. By the term "injected", it is referred to pouring or spraying the reactive composition into the cavity.

In one embodiment, a temperature of less than 80°C is maintained in step (S2) in the embodiment 2. In another embodiment, the temperature is in between 35°C to 70°C. In yet another embodiment, it is in between 45°C to 65°C. The PU foam is obtained with the tack free time of less than 12 seconds and has the foam density in between 15 kg/m³ to 40 kg/m³ determined according to ASTM D1622. The low tack free time provides for no or very less spilling of the reactive composition from the mixing head.

### Semi-rigid PU foam

Another aspect of the present invention is embodiment 3, directed to the semi-rigid PU foam obtained by the process of the embodiment 2. In an embodiment, the semi-rigid PU foam has the foam density of less than 40 kg/m³ determined according to ASTM D1622.

In one embodiment, the semi-rigid PU foam of the embodiment 3 is storage stable for several weeks and even months, is dimensionally stable and results in acceptable isocyanate and amine emission levels. The isocyanate and amine emission levels can be measured using any standard technique known to the person skilled in the art. In an embodiment, the isocyanate level in the air can be determined using OSHA 47 techniques. The reactive composition of the embodiment 1 results in isocyanate levels in air of less than 0.5 ppb with ventilation and less than 2 ppb without ventilation. Further, the amine emission, particularly diethanolamine levels is less than 0. 1 ppm in air determined using OSHA 60.

In another embodiment, the semi-rigid PU foam of the embodiment 3 is capable of adhering to a variety of surfaces, including those surfaces comprised of one or more metals, carbon fibers, plastics and/or polymers.

The semi-rigid PU foams, as described herein, are useful for NVH applications in automobiles, particularly in areas, such as but not limited to, dash boards, headliners, instrument panel trim, underlays and mats.

### Process for filling cavity

Another aspect of the present invention is embodiment 4, directed to a process for filling the cavity, said process comprising the steps of:
(M1) injecting the reactive composition of the embodiment 1 in the cavity defined by at least two sides, and
(M2) curing the reactive composition so that the reactive composition expands to bridge the sides of the cavity.

In an embodiment, the isocyanate reactive component (B) and the isocyanate component (A) in the reactive composition of the embodiment 4, is present in the weight ratio, (B):(A), in between 1.0:3.0 to 3.0:1.0, as described in the embodiment 1. In another embodiment, the isocyanate reactive component (B) and the isocyanate component (A) in the reactive composition of the embodiment 4, is present in the mix ratio by volume, (B):(A), in between 1.0:3.0 to 3.0:1.0, as described in the embodiment 1.

In one embodiment, the cavity of the embodiment 4 is filled completely with the reactive composition. In another embodiment, the cavity of the embodiment 4 is filled partially with the reactive composition to provide increased stiffness or reinforcement in some localized area.

In another embodiment, the reactive composition can be injected in the cavity, for example, by the process described in the embodiment 2. The reactive composition is inherently tacky so that it sticks to an internal surface of the cavity and is then cured. Suitable curing conditions, as in embodiment 2, result in foaming of the reactive composition to form the semi-rigid PU foam.

### Filled cavity

Another aspect of the present invention is embodiment 5, directed to a filled cavity obtained by the process of the embodiment 4.

In one embodiment, the filled cavity is a vehicle body cavity. The acoustic performance of the semi-rigid PU foams in the filled cavity of the embodiment 5 can be determined using SAE J2846 techniques, which measure the amount of noise reduction when a material is introduced into a cavity for noise control purpose (insertion loss). The filled cavity of the present invention, particularly the semi-rigid PU foam in the filled cavity, have acceptable insertion loss, when compared to the state-of-the-art semi-rigid PU foams.

In the present context, insertion loss is the reduction of noise level at a given location due to placement of a noise control device in the sound path between the sound source and that location. The insertion loss for a given material is the ability to reduce sound travelling through that material. The insertion is determined using SAE J2846.

### Shaped article

Another aspect of the present invention is embodiment 6, directed to a shaped article comprising the filled cavity of the embodiment 5 or the cavity obtained in the embodiment 4. In one embodiment, the shaped article is an automobile part.

### Examples

The presently claimed invention is illustrated by the non-restrictive examples which are as follows:

### Compounds

| | |
|---|---|
| Autocatalytic polyol | Polyether polyol based on ethanolamine with end capping of propylene oxide and ethylene oxide having an average functionality of 3.0 and hydroxyl number in between 490 mg KOH/g to 520 mg KOH/g, obtained from BASF |
| Polyol | Glycerine and propylene oxide-based polyether polyol with ethylene oxide end capping having an average functionality of 3.0 and hydroxyl number in between 26.5 mg KOH/g to 28.5 mg KOH/g, obtained from BASF |
| Crosslinker | Diethanolamine, obtained from Sigma Aldrich |
| Amine catalyst | AC1: N, N, N'-trimethyl-N'-hydroxyethyl bis(aminoethyl) ether, |
| | AC2: N,N-bis(3-dimethyl-aminopropyl)N-isopropanolamine obtained from Huntsman |
| Surfactant | Polyether polydimethylsiloxane copolymer obtained from Evonik |
| Cell opener | Solution of organic polymers having hydroxyl number of < 5.0 mg KOH/g, obtained from Evonik |
| Isocyanate | Polymeric methylene diphenyl diisocyanate having an average functionality of 2.7, obtained from BASF |

### Standard methods

| | |
|---|---|
| Isocyanate emission level | OSHA 47 |
| Amine emission level | OSHA 60 |
| Foam density | ASTM D1622 |
| Acoustic performance | SAE J2846 |

Tack free time was determined by tapping a tongue depressor on the surface of the semi-rigid PU foam until no material transferred onto the tongue depressor.

Shear adhesion was determined using a 100 mm × 300 mm steel panel. The panels were placed in a jig with spacers with foaming of the reactive composition carried out in a cavity of 100 mm × 150 mm × 25 mm, thereby obtaining a test piece. Test load was applied in the central direction of the test piece alongwith the spacer and pulled at a tensile rate of 50 mm/min until the test piece broke.

### General synthesis of the reactive composition

The aforementioned ingredients were used to prepare the isocyanate component (A) and the isocyanate reactive component (B). The two components were processed via GRACO HFR mixing device at a temperature of 60°C, pressure ranging between 4.0 MPa to 5.5 MPa and a flow rate of 120 ml/s for IE 1 and 80 ml/s for IE 2, respectively. A summary of the ingredients used and their amounts (all in wt.-%) is mentioned in Table 1.

**Table 1: Inventive examples**

| Ingredients | IE 1 (wt.-%) | IE 2 (wt.-%) |
|---|---|---|
| Isocyanate component (A) | | |
| Isocyanate | 100 | 100 |

| Isocyanate reactive component (B) | | |
|---|---|---|
| Autocatalytic polyol | 43.25 | 44.5 |
| Polyol | 43.25 | 43.25 |
| Additive package^{#} | 3.5 | 4.4 |
| Cell opener | -- | 3.0 |
| Water | 10.0 | 3.6 |
| Index | 58 | 103 |
| Mix ratio (B:A by volume) | 1.0:1.0 | 1.0:1.0 |
| Mix ratio (B:A by weight)* | 0.86:1.0 | 0.89:1.0 |
| Isocyanate emission level (ppb) | < 0.47 | <0.33 |
| Amine emission level (ppm) | < 0.057 | <0.056 |

| | | |
|---|---|---|
| *calculated as (autocatalytic polyol + polyol + additive package) / isocyanate #additive package = crosslinker + AC1 + AC2 + surfactant | | |

### Comparative example (CE)

The inventive composition (IE 1) was compared with a prepolymer composition described in Table III in US 8,455,679 B2. The mix ratio (B:A by volume) was kept at 1.0:24.0 (equivalent mix ratio by weight of 1.0:27.0).

The foamed articles were tested for their acoustic performance, the results of which are summarized in Table II. The size of the cavity in SAE J2846 was 75 mm (length) × 75 mm (breadth) × 250 mm (height) with the foam filled to a volume to crown at the top of the cavity.

**Table II: Insertion loss data for inventive and comparative foams**

| Frequency (Hz) | IE 1 (dB/20 µPa) | CE (dB/20 µPa) |
|---|---|---|
| 800 | 22.25 | 21.35 |
| 1000 | 34.26 | 26.99 |
| 1250 | 27.49 | 28.67 |
| 1600 | 33.17 | 22.67 |
| 2000 | 28.86 | 30.87 |
| 2500 | 33.03 | 26.66 |
| 3150 | 35.71 | 32.35 |
| 4000 | 32.81 | 32.38 |
| 5000 | 38.75 | 35.05 |
| 6300 | 43.45 | 38.44 |
| 8000 | 42.17 | 39.69 |
| 10000 | 44.65 | 42.92 |

The acoustic performance is dependent on frequency and porous materials generally have a good sound absorbing characteristics at higher values (> 1000 Hz), therefore the insertion loss will increase at higher frequencies. The overall trend of the insertion loss for the IE 1 is similar to CE. Further, the properties of the foams obtained by the inventive formulation, as summarized in Table III, are more or less similar to the comparative foam material, however, the present invention provides for foams obtained at lower mix ratio. This results in cost efficient foaming.

**Table III: Mechanical properties of the inventive and comparative foams**

| Property | IE 1 | CE |
|---|---|---|
| Tack free time (s) | 8.9 | 8.7 |
| Foam density (kg/m³) | 18 | 27 |
| Shear adhesion (kPa) | 36.1 | 12.1 |

## Claims

1. A reactive composition for producing a semi-rigid polyurethane foam **characterized by** a foam density of less than 40 kg/m³, determined according to ASTM D1622, said composition comprising:
(A) an isocyanate component comprising methylene diphenyl diisocyanate and/or polymeric methylene diphenyl diisocyanate, and
(B) an isocyanate reactive component comprising
(a) 25 wt.-% to 75 wt.-% of at least one autocatalytic polyol having an average functionality in between 2.8 to 3.5 and a hydroxyl number in between 450 mg KOH/g to 600 mg KOH/g,
(b) 10 wt.-% to 70 wt.-% of at least one polyol having an average functionality in between 2.2 to 5.0 and hydroxyl number in between 20 mg KOH/g to 100 mg KOH/g,
(c) 0.1 wt.-% to 5.0 wt.-% of at least one crosslinker,
(d) 0.01 wt.-% to 5.0 wt.-% of at least one amine catalyst,
(e) 0.1 wt.-% to 5.0 wt.-% of at least one surfactant, and
(f) 1.0 wt.-% to 15.0 wt.-% of water,
wherein the wt.% is based on the total weight of isocyanate reactive component, wherein crosslinker (c) is selected from monoethanolamine, diethanolamine, triethanolamine, glycerine, trimethylolpropane and pentaerythritol.

2. The reactive composition according to claim 1, wherein the isocyanate reactive component (B) and the isocyanate component (A) is present in a weight ratio, (B):(A), in between 1.0:3.0 to 3.0:1.0.

3. The reactive composition according to claim 1 or 2, wherein the isocyanate reactive component (B) and the isocyanate component (A) is present in a weight ratio, (B):(A), in between 0.8:1.0 to 1.0:1.0.

4. The reactive composition according to one or more of claims 1 to 3, wherein the isocyanate component (A) and the isocyanate reactive component (B) are present at an isocyanate index in between 40 to 200.

5. The reactive composition according to one or more of claims 1 to 4, wherein the at least one autocatalytic polyol (a) is a polyether polyol that is obtained by reacting an amine-containing starter molecule and an alkylene oxide.

6. The reactive composition according to claim 5, wherein the amine-containing starter molecule comprises ethanolamine.

7. The reactive composition according to claim 5, wherein the alkylene oxide is selected from ethylene oxide and propylene oxide.

8. The reactive composition according to one or more of claims 1 to 7, wherein the at least one polyol (b) has the average functionality in between 2.4 to 3.2 and hydroxyl number in between 25 mg KOH/g to 50 mg KOH/g.

9. The reactive composition according to one or more of claims 1 to 8 further comprising at least one additive (g).

10. The reactive composition according to claim 9, wherein the additive (g) is selected from cell openers, flame retardants, dyes, pigments, IR absorbing materials, stabilizers, plasticizers, antistats, fungistats, bacterio-stats, hydrolysis controlling agents, curing agents, antioxidants, alkylene carbonates, carbonamides and pyrrolidones.

11. A process for preparing a semi-rigid polyurethane foam, said process comprising the steps of:
(S1) mixing the reactive composition according to one or more of claims 1 to 10, and
(S2) curing the reactive composition to obtain a semi-rigid polyurethane foam having a foam density of less than 40 kg/m³ determined according to ASTM D1622,
wherein the reactive composition has a tack free time of less than 15 seconds.

12. The process according to claim 11, wherein in step (S2) a temperature of less than 80°C is maintained.

13. Semi-rigid polyurethane foam obtained by the process according to claim 11 or 12.

14. A process for filling a cavity, said process comprising the steps of:
(M1) injecting the reactive composition according to one or more of claims 1 to 10 in a cavity defined by at least two sides, and
(M2) curing the reactive composition so that the reactive composition expands to bridge the sides of the cavity.

15. A filled cavity obtained by the process according to claim 14.

16. The filled cavity according to claim 15, wherein the filled cavity is a vehicle body cavity.

17. A shaped article comprising the filled cavity according to claim 15 or 16 or as obtained by the process according to claim 14.

## Patentansprüche

1. Eine reaktive Zusammensetzung zur Herstellung eines halbstarren Polyurethanschaums, charakterisiert durch Schaumdichte von weniger als 40 kg/m³, festgelegt gemäß ASTM D1622, diese Zusammensetzung umfasst:
(A) eine Isocyanat-Komponente, die aus Methylen-Diphenyl-Diisocyanat und/oder polymerem Methylen-Diphenyl-Diisocyanat besteht, und
(B) eine isocyanat-reaktive Komponente, die aus einer Isocyanat-reaktiven Komponente besteht
(a) 25 Wt.-% bis 75 Wt.-% von mindestens einem autokatalytischen Polyol mit einer durchschnittlichen Funktionalität zwischen 2,8 und 3,5 und einem Hydroxylwert zwischen 450 mg KOH/g und 600 mg KOH/g,
(b) 10wt.-% bis 70
Wt.-% von mindestens einem Polyol mit durchschnittlicher Funktionalität in zwischen 2,2 und 5,0 und Hydroxyl zwischen 20 mg KOH/g und 100 mg KOH/g,
(c) 0,1 Wt.-% bis 5,0 Wt.-% von mindestens einem Vernetzer,
(d) 0,01 Wt.-% bis 5,0 Wt.-% von mindestens einem Aminkatalysator,
(e) 0,1 Wt.-% bis 5,0 Wt.-% von mindestens einem Tensid, und
(f) 1,0 Gewicht bis 15,0 Gewicht Wasser,
wobei der Wt.% auf dem Gesamtgewicht der isocyanat-reaktiven Komponente basiert, wobei der Querbinder (c) aus Monoethanolamin, Diethanolamin, Triethanolamin, Glycerin, Trimethylolpropan und Pentaerythritol ausgewählt wird.

2. Die reaktive Zusammensetzung gemäß Anspruch 1, wobei das Isocyanat reaktiv ist Komponente (B) und die Isocyanatkomponente (A) sind in einem Gewichtsverhältnis (B):(A) zwischen 1,0:3,0 und 3,0:1,0 vorhanden.

3. Die reaktive Zusammensetzung gemäß Anspruch 1 oder 2, wobei das Isocyanat reaktiv ist Komponente (B) und die Isocyanatkomponente (A) ist in einem Gewichtsverhältnis (B):(A) in zwischen 0,8:1,0 und 1,0:1,0.

4. Die reaktive Zusammensetzung gemäß einem oder mehreren der Ansprüche 1 bis 3, wobei die Isocyanat-Komponente (A) und die reaktive Isocyanat-Komponente (B) liegen bei einem Isocyanatindex zwischen 40 und 200 auf.

5. Die reaktive Zusammensetzung gemäß einer oder mehreren der Ansprüche 1 bis 4, wobei mindestens ein autokatalytisches Polyol (a) ein Polyetherpolyol ist, das durch Reaktion eines aminhaltigen Startermoleküls und eines Alkylenoxids gewonnen wird.

6. Die reaktive Zusammensetzung gemäß Behauptung 5, wobei das aminhaltige Startermolekül Ethanolamin enthält.

7. Die reaktive Zusammensetzung gemäß Anspruch 5, wobei das Alkylenoxid aus Ethylenoxid und Propylenoxid ausgewählt wird.

8. Die reaktive Zusammensetzung gemäß einem oder mehreren der Ansprüche 1 bis 7, wobei mindestens ein Polyol (b) eine durchschnittliche Funktionalität zwischen 2,4 und 3,2 und eine Hydroxylzahl zwischen 25 mg KOH/g und 50 mg KOH/g aufweist.

9. Die reaktive Zusammensetzung gemäß einem oder mehreren der Ansprüche 1 bis 8 umfasst außerdem mindestens einen Zusatzstoff (g).

10. Die reaktive Zusammensetzung gemäß Anspruch 9, wobei der Zusatzstoff (g) aus Zellöffnern, Flammschutzmitteln, Farbstoffen, Pigmenten, IR-absorbierenden Materialien, Stabilisatoren ausgewählt wird,
Weichmacher, Antistata, Fungistata, Bakterien-Statika, Hydrolysekontrollmittel, Heilmittel, Antioxidantien, Alkylenkarbonate, Carbonamide und Pyrrolidone.

11. Ein Verfahren zur Herstellung eines halbstarren Polyurethanschaums, dieses Verfahren umfasst folgende Schritte:
(S1) Mischung der reaktiven Zusammensetzung gemäß einem oder mehreren der Ansprüche 1 bis 10, und
(S2) die reaktive Zusammensetzung aushärtet, um einen halbstarren Polyurethanschaum mit einer Schaumdichte von weniger als 40 kg/m³ zu erhalten, bestimmt gemäß ASTM D1622,
wobei die reaktive Zusammensetzung eine Tack-freie Zeit von weniger als 15 Sekunden hat.

12. Der Prozess gemäß Anspruch 11, bei dem im Schritt (S2) eine Temperatur von weniger als 80°C gehalten wird.

13. Halbstarrer Polyurethanschaum, der durch das Verfahren gemäß Anspruch 11 oder 12 gewonnen wurde.

14. Ein Verfahren zum Füllen einer Höhlung, der aus folgenden Schritten besteht:
(M1) Injektion der reaktiven Zusammensetzung gemäß einem oder mehreren der Ansprüche 1 bis 10 in eine durch mindestens zwei Seiten definierte Höhlung, und
(M2) die reaktive Zusammensetzung wird so aushärtet, dass die reaktive Zusammensetzung sich ausdehnt und die Seiten der Höhle überbrückt.

15. Eine gefüllte Höhlung, die durch das Verfahren gemäß Anspruch 14 entstanden ist.

16. Die gefüllte Höhlung laut Anspruch 15, wobei die gefüllte Höhlung eine Fahrzeugkarosseriehöhle ist.

17. Ein geformtes Gegenstand, das die gefüllte Höhlung gemäß Anspruch 15 oder 16 oder wie sie durch das Verfahren gemäß Anspruch 14 erlangt wurde, umfasst.

## Revendications

1. Une composition réactive pour produire une mousse de polyuréthane semi-rigide **caractérisée par** un densité de mousse inférieure à 40 kg/m3, déterminé selon la norme ASTM D1622, cette composition comprenant :
(A) un composant isocyanate comprenant le diisocyanate de méthylène diphényle et/ou le diisocyanate de méthylène polymérique, et
(B) un composant réactif isocyanate comprenant
(a) 25 % en poids à 75 % d'au moins un polyol autocatalytique ayant une fonctionnalité moyenne comprise entre 2,8 et 3,5 et un nombre hydroxyle entre 450 mg KOH/g et 600 mg KOH/g,
(b) 10 % à 70
En poids- % d'au moins un polyol ayant une fonctionnalité moyenne dans entre 2,2 et 5,0 et le nombre hydroxyle entre 20 mg KOH/g et 100 mg KOH/g,
(c) 0,1 % en poids à 5,0 % en poids d'au moins un réticulateur,
(d) 0,01 % en poids à 5,0 % en poids d'au moins un catalyseur d'amine,
(e) 0,1 % en poids à 5,0 % en poids d'au moins un tensioactif, et
(f) 1,0 % en poids à 15,0 % en poids de l'eau,
où le pourcentage en poids est basé sur le poids total du composant réactif isocyanate, où le réticulateur (C) est sélectionné parmi la monoéthanolamine, la diéthanolamine, la triéthanolamine, la glycérine, le triméthylolpropane et le pentaérythritol.

2. La composition réactive selon l'affirmation 1, où l'isocyanate réactive
la composante (B) et la composante isocyanate (A) sont présentes dans un rapport de poids, (B):(A), compris entre 1,0:3,0 et 3,0:1,0.

3. La composition réactive selon l'affirmation 1 ou 2, dans laquelle l'isocyanate réactive
la composante (B) et la composante isocyanate (A) sont présentes dans un rapport de poids, (B):(A), dans entre 0,8:1,0 et 1,0:1,0.

4. La composition réactive selon une ou plusieurs affirmations 1 à 3, dans laquelle le
la composante isocyanate (A) et la composante réactive isocyanate (B) sont présentes à un indice isocyanate compris entre 40 et 200.

5. La composition réactive selon une ou plusieurs revendications 1 à 4, où au moins un polyol autocatalytique (a) est un polyol polyéther obtenu en réactionnant une molécule de démarrage contenant de l'amine et un oxyde d'alkylène.

6. La composition réactive selon la revendication 5, où la molécule de démarrage contenant de l'amine est composée d'éthanolamine.

7. La composition réactive selon la revendication 5, où l'oxyde d'alkylène est sélectionné à partir de l'oxyde d'éthylène et de l'oxyde de propylène.

8. La composition réactive selon une ou plusieurs revendications 1 à 7, où au moins un polyol (b) a une fonctionnalité moyenne comprise entre 2,4 et 3,2 et un nombre hydroxyle entre 25 mg KOH/g et 50 mg KOH/g.

9. La composition réactive selon une ou plusieurs affirmations 1 à 8 comprend en outre au moins un additif (g).

10. La composition réactive selon la revendication 9, où l'additif (g) est sélectionné parmi les ouvre-cellules, retardateurs de flamme, colorants, pigments, matériaux absorbants IR, stabilisants,
plastifiants, antistats, fungistats, bactério-statistiques, agents contrôlant l'hydrolyse, agents de curation, antioxydants, carbonates d'alkylène, carbonamides et pyrrolidones.

11. Un procédé de préparation d'une mousse de polyuréthane semi-rigide, ce procédé comprenant les étapes suivantes :
(S1) mélange de la composition réactive selon une ou plusieurs affirmations 1 à 10, et
(S2) durcissement de la composition réactive pour obtenir une mousse de polyuréthane semi-rigide d'une densité de mousse inférieure à 40 kg/m3 déterminée selon la norme ASTM D1622,
où la composition réactive a un temps sans adhérence inférieur à 15 secondes.

12. Le procédé selon la revendication 11, dans lequel à l'étape (S2) une température inférieure à 80°C est maintenue.

13. Mousse de polyuréthane semi-rigide obtenue par le procédé selon la revendication 11 ou 12.

14. Un procédé de plombage d'une carie, ce processus comprenant les étapes suivantes :
(M1) injecter la composition réactive selon une ou plusieurs des affirmations 1 à 10 dans une cavité définie par au moins deux faces, et
(M2) la composition réactive durcissait de façon à ce que la composition réactive s'étende pour combler les côtés de la cavité.

15. Une cavité obtenue par le procédé selon la revendication 14.

16. La cavité remplie selon la revendication 15, où la cavité remplie est une cavité de carrosserie de véhicule.

17. Un article façonné comprenant la cavité remplie selon la revendication 15 ou 16 ou telle qu'obtenue par le procédé selon la revendication 14.
